# FASCICULE DE BREVET EUROPEEN

(11) **EP 3 283 329 B1**
(45) Date de publication et mention de la délivrance du brevet: **18.09.2019**
(21) Numéro de dépôt: 16718278.1
(22) Date de dépôt: 11.04.2016
(51) Int. Cl.: B60Q 3/74, F21W 106/00, F21Y 115/10, F21Y 113/13

(54) **MODULE D'ÉCLAIRAGE DE L'HABITACLE D'UN VÉHICULE AUTOMOBILE**
BELEUCHTUNGSMODUL FÜR DEN FAHRGASTRAUM EINES KRAFTFAHRZEUGS
LIGHTING MODULE FOR THE PASSENGER COMPARTMENT OF A MOTOR VEHICLE

(30) Priorité: 14.04.2015 FR 1553251
(43) Date de publication de la demande: 21.02.2018
(73) Titulaire: Valeo Vision, 93012 Bobigny Cedex (FR)
(72) Inventeur: CAZENAVE, Philippe, 59650 Villeneuve d'Ascq (FR); BOIROUX, Nicolas, 95000 Pontoise (FR); RJEB, Slim, 92000 Nanterre (FR)
(74) Mandataire: Valeo Vision
(86) Numéro de dépôt international: PCT/EP2016/057937
(87) Numéro de publication internationale: WO 2016/166065

(56) Documents cités:
- US-A- 6 132 072
- US-A- 6 152 590
- US-A- 6 158 882
- US-A1- 2003 133 302
- US-A1- 2006 092 659
- US-A1- 2010 188 838
- US-B1- 6 402 354

## Description

### DOMAINE TECHNIQUE DE L'INVENTION

L'invention concerne un module d'éclairage de l'habitacle d'un véhicule automobile.

### ARRIERE PLAN TECHNIQUE DE L'INVENTION

Dans le domaine de l'éclairage de l'habitacle d'un véhicule automobile, il est connu d'utiliser des ampoules à filament classiques comme sources lumineuses. Cependant, dans le domaine automobile comme dans d'autres domaines, on utilise de plus en plus fréquemment des diodes électroluminescentes (ou LED pour « *Light-Emitting Diode* » ou diodes émettrices de lumière en anglais, qui est un composant semiconducteur) comme source de lumière, notamment pour des raisons de consommation. Soit on réalise alors un éclairage monochromatique, soit on utilise un ensemble de LEDs émettant respectivement dans le rouge, le vert et le bleu afin d'obtenir une lumière blanche, ou toute autre couleur sur commande, en fonction du signal de commande appliqué aux LEDs. Des exemples de réalisation d'un module d'éclairage de l'habitacle d'un véhicule sont connus des documents US 2010/188838 A1 et US2006092659 A1.

Toutefois, si on souhaite commander le spectre lumineux de l'éclairage, et si on désire de plus que celui ci soit stable dans le temps, c'est à dire notamment avec la température, cela nécessite des circuits de commande électronique qui demandent de l'espace disponible, notamment pour les entrées/sorties optiques et électriques, ce qui réduit d'autant l'espace disponible à l'intérieur du véhicule, l'espace étant toujours un paramètre important pour un véhicule automobile.

### BREF RESUME DE L'INVENTION

L'invention a pour but de réaliser un module d'éclairage de l'habitacle d'un véhicule automobile, qui soit compact, qui soit fermé pour éviter les fuites de lumière, et qui soit industrialisable à un coût minimum.

A cet effet, l'invention a pour objet un module d'éclairage de l'habitacle d'un véhicule automobile, suivant la revendication 1, comportant :
- un boîtier,
- des moyens lumineux disposés dans le boîtier et aptes à émettre un faisceau lumineux d'éclairage présentant une longueur d'onde sélectivement choisie parmi au moins deux longueurs d'onde distinctes prédéterminées,
- des moyens électroniques de contrôle des moyens lumineux agencés pour commander l'émission du faisceau d'éclairage avec la longueur d'onde choisie,
- un support d'interconnexion électrique portant les moyens lumineux et les moyens de contrôle et interconnectant ces derniers,
- des moyens de connexion électrique des moyens lumineux et/ou des moyens électroniques de contrôle avec l'extérieur du boitier,
- des moyens d'interface optique assurant le guidage du faisceau d'éclairage hors du boîtier ;
- une embase et un couvercle, le couvercle étant configuré pour coopérer avec l'embase de sorte à fermer le boîtier; et par le fait que le couvercle est configuré pour coopérer avec l'embase de sorte à fermer le boîtier de façon étanche à la lumière.

De cette façon, le boitier selon l'invention qui contient les sources lumineuses et leur électronique de commande est étanche à la lumière, compact et de réalisation aisée industriellement, donc peu onéreux.

Selon différents modes de réalisation de l'invention, qui pourront être pris ensemble ou séparément :
- les moyens lumineux comportent au moins deux puces émettrices semiconductrices émettant chacune un rayonnement lumineux de longueur d'onde distincte.
- les moyens lumineux comportent trois puces émettrices semiconductrices émettant un rayonnement lumineux respectivement rouge, bleu et vert.
- les puces émettrices sont des diodes électroluminescentes.
- le boitier comporte en outre des moyens capteur de température, destinés à capter la température des moyens lumineux et reliés aux moyens électroniques de contrôle.
- les moyens capteur de température sont destinés à capter la température au voisinage des moyens lumineux.
- les moyens capteur de température comportent une thermistance à coefficient de température négatif.
- le boitier comporte en outre des circuits de protection électrique, portés par le support d'interconnexion et connectés entre les moyens électroniques de contrôle et les moyens de connexion électrique.
- le support d'interconnexion est configuré pour être disposé dans l'embase.
- les moyens de connexion sont disposés sur une même face du support d'interconnexion.
- les moyens de connexion électrique, l'embase et le couvercle sont configurés pour que les moyens de connexion et/ou le support d'interconnexion soient maintenus mécaniquement lorsque le boitier est fermé.
- le boîtier comporte une charnière entre l'embase et le couvercle agencée pour autoriser une rotation du couvercle par rapport à l'embase entre une position dans laquelle le boîtier est ouvert et une position dans laquelle le boîtier est fermé.
- le boitier peut être avantageusement réalisé en matériau plastique. Le cas échéant, l'embase, le couvercle et la charnière peuvent être réalisés dans le même matériau.
- les moyens de connexion sont destinés à coopérer avec un connecteur pour recevoir des instructions de commande d'émission d'un faisceau lumineux d'une longueur d'onde prédéterminée choisie. Le cas échéant, les moyens électroniques de contrôle sont agencés pour commander l'émission du faisceau d'éclairage de sorte à ce faisceau présente une longueur d'onde correspondant à ladite longueur d'onde prédéterminée choisie. Selon un exemple, les moyens de connexion comportent une pluralité de plages conductrices, à chacune desquelles est relié électriquement au moins un fil de connexion. Le cas échéant; les différents fils viennent s'insérer dans une barrette de connexion se terminant par autant de broches de connexion, ou contacts.
- le support d'interconnexion électrique et les moyens d'interface optique sont disposés dans le boîtier. De préférence, l'embase comporte un premier compartiment destiné à recevoir le support d'interconnexion électrique.
- l'embase comporte sur l'une de ses faces une ouverture optique en vis-à-vis des moyens lumineux et apte à coopérer avec les moyens d'interfaces optiques pour guider le faisceau d'éclairage hors du boîtier.
- l'embase peut comporter un deuxième compartiment, dont l'un des côté comporte une ouverture, le deuxième compartiment étant destiné à recevoir au moins une partie des moyens de connexion et ledit connecteur de sorte à garantir le contact mécanique entre ces moyens de connexion et ce connecteur.
- le cas échéant, l'embase peut comporter une fente destinée à coopérer avec ledit connecteur, par exemple avec une patte dudit connecteur, de sorte à empêcher un débranchement dudit connecteur.
- ladite fente est par exemple réalisée dans une surépaisseur d'une face du compartiment de l'embase et est disposée en vis à vis de ladite partie des moyens de connexion disposée dans le deuxième compartiment.
- le couvercle comporte une première plaque dont la dimension est égale à celle d'une face supérieure de l'embase de sorte à venir fermer cette dernière d'une façon ne laissant pas passer la lumière.
- le couvercle comporte encore, de préférence, une première plaque de référencement, par exemple formée par une surépaisseur de la première plaque, disposée sur sa face intérieure et correspondant aux dimensions du premier compartiment de l'embase, destinée à venir s'ajuster dans le premier compartiment lors de la fermeture du boitier.
- le couvercle peut comporter une deuxième plaque de référencement, par exemple formée par une surépaisseur de la première plaque, disposée sur sa face intérieure et correspondant aux dimensions du deuxième compartiment de l'embase, destinée à venir s'ajuster dans le deuxième compartiment lors de la fermeture du boitier.
- l'embase est dépourvue de moyens de maintien en place du support d'interconnexion.
- par exemple, le couvercle peut encore comporter des ergots de maintien, par exemple formés sur la première plaque de référencement et destinés à venir appuyer sur le support d'interconnexion de sorte à maintenir mécanique ce dernier en place lorsque le couvercle est fermé sur l'embase.
- le couvercle comporte en outre, de préférence, une plaque de maintien, par exemple formée par une surépaisseur de la deuxième plaque de référencement, destinée à venir appuyer sur une partie des moyens de connexion de sorte à maintenir mécaniquement ces derniers en place lorsque le couvercle est fermé sur l'embase.
- le couvercle est configuré pour coopérer avec l'embase par encliquetage.

### BREVE DESCRIPTION DES FIGURES

D'autres caractéristiques et avantages de l'invention ressortiront de la description détaillée qui suit, donnée à titre indicatif et illustrée par les dessins annexés, qui représentent :
- la figure 1, une vue en perspective éclatée d'un mode de réalisation du boitier d'éclairage selon l'invention ;
- la figure 2, une autre vue en perspective du boitier d'éclairage de la figure 1 ;
- la figure 3, une vue schématique d'un mode de réalisation du circuit électronique utilisé dans le boitier d'éclairage selon l'invention.
Sur ces différentes figures, les mêmes références se rapportent aux mêmes éléments.

### DESCRIPTION DETAILLEE DES FIGURES

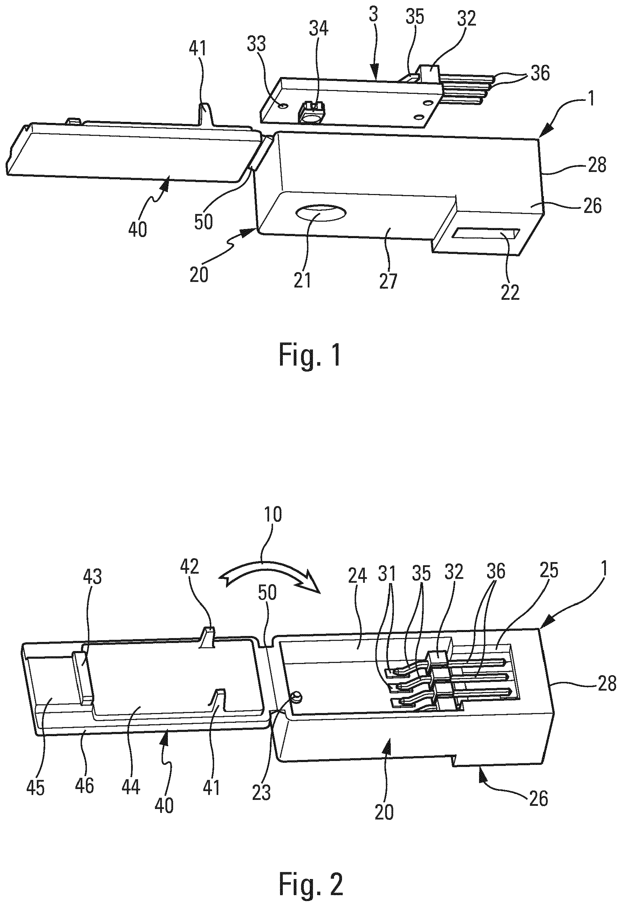

La figure 1 représente donc une vue en perspective éclatée, vue de dessous, d'un mode de réalisation du module d'éclairage selon l'invention, en position ouverte, et la figure 2, une vue en perspective de ce même boitier, toujours en position ouverte mais vu de dessus.

Sur ces figures ont été représentés le module d'éclairage comportant un boitier, repéré 1, comportant une embase 20 et un couvercle 40, destiné à venir se positionner sur l'embase 20 pour former le boitier. Le boîtier comporte une charnière 50 entre l'embase 20 et le couvercle 40, agencée pour autoriser une rotation du couvercle par rapport à l'embase entre une position dans laquelle le boîtier est ouvert et une position dans laquelle le boîtier est fermé, comme indiqué par une flèche 10 sur la figure 2. Le boitier 1 est par exemple réalisé en matériau plastique ; dans ce cas, l'embase, le couvercle et la charnière peuvent être réalisés dans le même matériau.

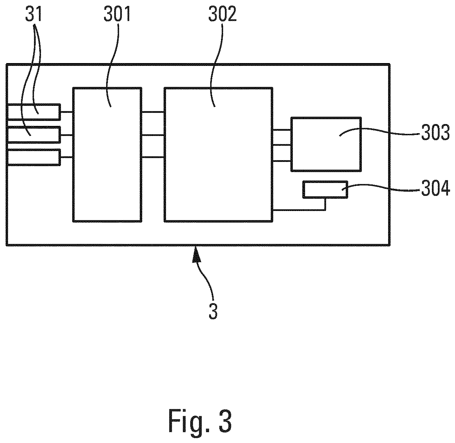

Le boitier 1 est destiné à recevoir un circuit électronique, par exemple disposé sur un support d'interconnexion électrique 3, tel qu'une carte de circuit imprimé, la carte 3 portant des moyens lumineux émettant un faisceau lumineux d'éclairage, comportant éventuellement des moyens optiques d'interface schématisés par la référence 34 portés par la carte de circuit imprimé 3, ainsi que des moyens électroniques de contrôle des moyens lumineux, comme décrit plus en détail en référence à la figure 3. Le circuit électronique porté par la carte 3 est relié électriquement à l'extérieur du boitier à l'aide de moyens de connexion. Ces moyens de connexion comportent un ensemble de plages conductrices 31, par exemple quatre, à chacune desquelles est relié électriquement un fil de connexion 35 ; les différents fils 35 viennent s'insérer dans une barrette de connexion 32 se terminant par autant de broches de connexion 36, ou contacts, ici quatre.

L'embase 20 a par exemple globalement la forme d'un parallélépipède rectangle dont la sixième face, face supérieure sur les figures 1 et 2, est ouverte et destinée à recevoir le couvercle 40. Sa face inférieure 27, opposée à la face supérieure, comporte par exemple deux ouvertures, 21 et 22, l'ouverture 21 ayant pour fonction l'interconnexion optique du boitier 1 avec l'extérieur. L'ouverture 22, par exemple en forme de fente, est par exemple réalisée dans une surépaisseur 26 de la face inférieure 27 de l'embase 20 et disposée en vis à vis des contacts 36 de la carte de circuit imprimé 3 ; l'ouverture 22 est destinée à coopérer avec ledit connecteur, par exemple avec une patte de clippage du connecteur, de sorte à empêcher un débranchement du connecteur. L'embase comporte en outre une ouverture sur un de ses côtés, par exemple le petit côté 28 opposé à celui portant la charnière 50, pour l'interconnexion électrique du boitier 1 avec l'extérieur.
Sur la figure 2, on voit que l'embase comporte par exemple deux compartiments, l'un, repéré 24, destiné à recevoir la carte de circuit imprimé 3 et le second, 25, plus petit, destiné à recevoir au moins une partie des moyens de connexion de la carte 3, à savoir dans l'exemple des figures, les contacts 36. Les moyens de connexion du boitier 1, incluant les contacts 36, sont destinés à coopérer avec un connecteur pour recevoir des instructions de commande d'émission d'un faisceau lumineux d'une longueur d'onde prédéterminée choisie Le deuxième compartiment est destiné à recevoir également ce connecteur de sorte à garantir le contact mécanique entre les moyens de connexion et ce connecteur

Le couvercle 40 comporte une plaque 46 dont la dimension est égale à celle de la face supérieure de l'embase 20 de sorte à venir fermer cette dernière d'une façon ne laissant pas passer la lumière. Il comporte encore, de préférence, une deuxième plaque dite de référencement, ou surépaisseur, 44, disposée sur sa face intérieure et correspondant aux dimensions du compartiment 24 de l'embase, destinée à venir s'ajuster dans le compartiment 24 lors de la fermeture du boitier. De même, le couvercle comporte une troisième plaque de référencement ou surépaisseur 45, destinée à coopérer avec le compartiment 25 de l'embase. Les éléments 44 et 45 permettent le bon positionnement et l'étanchéité à la lumière du couvercle 40 sur l'embase 20. Le couvercle 40 comporte en outre, de préférence, une surépaisseur 43, disposée, par exemple sur la partie 45, de sorte à venir appuyer sur la barrette de connexion 32 et maintenir mécaniquement cette dernière en place lorsque le couvercle 40 est fermé sur l'embase 20. Le couvercle 40 peut encore comporter des ergots 41 et 42 coopérant avec l'embase lors de la fermeture du boitier, et plus précisément destinés à venir appuyer sur le support d'interconnexion 3 de sorte à maintenir mécaniquement ce dernier en place lorsque le couvercle 40 est fermé sur l'embase 20.

La figure 3 représente une vue schématique d'un mode de réalisation du circuit électronique utilisé dans le boitier d'éclairage 1.

Sur cette figure, on a représenté une face de la carte de circuit imprimé 3, sur laquelle on retrouve les plages conductrices 31, par exemple au nombre de trois. Ces plages reçoivent par exemple respectivement l'alimentation électrique (tension et masse) et les signaux de commande circulant sur le réseau de communication du véhicule, par exemple de type LIN.
La carte 3 comporte des moyens électroniques de contrôle 302, par exemple un microprocesseur, connectés aux plages 31 de préférence par l'intermédiaire de circuits de protection électrique 301, assurant notamment la protection des composants contre les surtensions.
Le microprocesseur 302 assure la commande et le contrôle de moyens lumineux 303 d'émission d'un faisceau lumineux d'éclairage comportant au moins deux longueur d'onde distinctes ; ces moyens d'émission comportent par exemple des puces émettrices semiconductrices, de préférence des diodes électroluminescentes ou LEDs, par exemple trois LEDs émettant respectivement des rayonnements lumineux dans le rouge, le vert et le bleu, de façon à pouvoir, en combinant les émissions sur commande des moyens 302, obtenir de la lumière blanche ou tout autre couleur choisie. Les moyens lumineux sont disposés de telle sorte que le faisceau lumineux émis par eux le soit sur l'autre face de la carte de circuit imprimé 3, comme représenté sur la figure 1. Dans une variante de réalisation, il est possible de disposer tous les composants électroniques, y compris les LEDs, sur la même face de la carte de circuit imprimé 3.

Les moyens de connexion 31, 32, 35 et 36 sont destinés à coopérer avec un connecteur pour recevoir des instructions de commande d'émission d'un faisceau lumineux d'une longueur d'onde prédéterminée choisie. Le cas échéant, les moyens électroniques de contrôle 302 sont agencés pour commander l'émission du faisceau d'éclairage de sorte à ce que le faisceau présente une longueur d'onde correspondant à ladite longueur d'onde prédéterminée choisie.

La carte 3 porte encore préférentiellement des moyens capteur de température 304, destinés à capter la température des moyens lumineux et relié au microprocesseur 302 : en effet, l'émission lumineuse et notamment sa longueur d'onde sont susceptibles de varier avec la température, et le contrôle du spectre lumineux émis par l'ensemble des LEDs nécessite de corriger les intensités émises par chacune d'elles en fonction de la température.
Les moyens capteur de température comportent par exemple une thermistance à coefficient de température négatif, disposée à proximité des moyens lumineux et reliée aux moyens de contrôle 302. L'avantage d'utiliser un tel composant est son coût limité, sa précision étant adaptée à l'application considérée.

## Revendications

1. Module d'éclairage de l'habitacle d'un véhicule automobile, le module comportant :
- un boîtier (1),
- des moyens lumineux (303) disposés dans le boîtier et aptes à émettre un faisceau lumineux d'éclairage présentant une longueur d'onde sélectivement choisie parmi au moins deux longueurs d'onde distinctes prédéterminées,
- des moyens électroniques de contrôle (302) des moyens lumineux (303) agencés pour commander l'émission du faisceau d'éclairage avec la longueur d'onde choisie,
- un support (3) d'interconnexion électrique portant les moyens lumineux (303) et les moyens électroniques de contrôle (302) et interconnectant ces derniers,
- des moyens de connexion électrique (31, 32, 35, 36) des moyens lumineux (303) et/ou des moyens électroniques de contrôle (302) avec l'extérieur du boitier,
- des moyens d'interface optique (21, 34) assurant le guidage du faisceau d'éclairage hors du boitier (1) ;
**caractérisé par le fait qu'**il comporte une embase (20) et un couvercle (40), le couvercle étant configuré pour coopérer avec l'embase de sorte à fermer le boitier ; et **par le fait que** le couvercle est configuré pour coopérer avec l'embase de sorte à fermer le boitier de façon étanche à la lumière.

2. Module selon la revendication 1, **caractérisé par le fait que** les moyens lumineux (303) comportent au moins deux puces émettrices semiconductrices émettant chacune un rayonnement lumineux de longueur d'onde distincte.

3. Module selon la revendication 2, **caractérisé par le fait que** les moyens lumineux (303) comportent trois puces émettrices semiconductrices émettant un rayonnement lumineux respectivement rouge, bleu et vert.

4. Module selon l'une des revendications 2 ou 3, **caractérisé par le fait que** les puces émettrices sont des diodes électroluminescentes.

5. Module selon l'une des revendications précédentes, **caractérisé par le fait qu'**il comporte en outre des moyens capteur de température (304), destinés à capter la température des moyens lumineux (303) et reliés aux moyens électroniques de contrôle(302).

6. Module selon la revendication précédente, **caractérisé par le fait que** les moyens capteur de température (304) comportent une thermistance à coefficient de température négatif.

7. Module selon l'une des revendications précédentes, **caractérisé par le fait qu'**il comporte en outre des circuits de protection électrique (301), portés par le support d'interconnexion et connectés entre les moyens électroniques de contrôle (302) et les moyens de connexion électrique (31, 32, 35, 36).

8. Module selon l'une des revendications précédentes, **caractérisé par le fait que** le support d'interconnexion (3) est configuré pour être disposé dans l'embase (20).

9. Module selon la revendication précédente, **caractérisé par le fait que**, l'embase (20) et le couvercle (40) sont configurés pour que les moyens de connexion et/ou le support d'interconnexion (3) soient maintenus mécaniquement lorsque le boitier (1) est fermé.

## Patentansprüche

1. Beleuchtungsmodul für den Fahrgastraum eines Fahrzeugs Automotive, wobei das Modul umfasst:
- ein Gehäuse (1), Lichtmittel (303), die im Gehäuse angeordnet sind und einen Lichtstrahl mit einer Wellenlänge emittieren können, die selektiv aus mindestens zwei Wellenlängen ausgewählt ist, vorgegebene Unterscheidungen,
- elektronisches Steuerungsmittel (302) der Leuchtmittel (303), die angeordnet ist, um die Emission des Beleuchtungsstrahls mit der ausgewählten Wellenlänge zu steuern,
- einen elektrischen Verbindungsträger (3), der die Mittel trägt.
(303) und die elektronischen Steuermittel (302) und deren Verbindung,
- elektrische Verbindungsmittel (31, 32, 35, 36), Leuchtmittel (303) und/oder elektronische Steuermittel (302) mit der Außenseite des Gehäuses,
- optische Schnittstellenmittel (21, 34) zum Führen des Lichtstrahls aus dem Gehäuse (1) ;
**dadurch gekennzeichnet, dass** sie eine Basis (20) und eine Abdeckung (40) umfasst, wobei die Abdeckung konfiguriert ist, um mit der Basis zusammenzuwirken, um die Box zu schließen; und durch die Tatsache, dass die Abdeckung konfiguriert ist, um
mit der Grundplatte zusammenwirken, um das Gehäuse lichtdicht zu schließen.

2. Modul nach Anspruch 1, **dadurch gekennzeichnet, dass** die Beleuchtungsmittel (303) mindestens zwei Senderchips umfassen Halbleiter, die jeweils Lichtstrahlung mit einer anderen Wellenlänge emittieren.

3. Modul nach Anspruch 2, **dadurch gekennzeichnet, dass** die Beleuchtungsmittel (303) drei Halbleiter emittierende Chips umfassen, die jeweils Lichtstrahlung emittieren.
rot, blau und grün.

4. Modul nach einem der Ansprüche 2 oder 3, **dadurch gekennzeichnet, dass** die emittierenden Chips lichtemittierende Dioden sind.

5. Modul nach einem der vorhergehenden Ansprüche, **dadurch gekennzeichnet, dass** es auch Temperatursensormittel (304) beinhaltet, die dazu bestimmt sind, die Temperatur der Lichtmittel (303) zu erfassen und mit den elektronischen Steuermitteln (302) verbunden sind.

6. Modul nach dem vorherigen Anspruch, **dadurch gekennzeichnet, dass** die Temperatursensoreinrichtung (304) einen Thermistor mit einem negativen Temperaturkoeffizienten beinhaltet.

7. Modul nach einem der vorhergehenden Ansprüche, **dadurch gekennzeichnet, dass** es auch elektrische Schutzschaltungen (301) beinhaltet, die von dem Verbindungsträger getragen und zwischen den elektronischen Steuermitteln (302) und den elektrischen Verbindungsmitteln (31, 32, 35, 36) verbunden sind.

8. Modul nach einem der vorstehenden Ansprüche, **dadurch gekennzeichnet, dass** der Verbindungsträger (3) konfiguriert ist, um in der Basis (20) angeordnet zu werden.

9. Modul nach dem vorherigen Anspruch, **dadurch gekennzeichnet, dass** die Basis (20) und die Abdeckung (40) so konfiguriert sind, dass sie die Verbindungsmittel und/oder der Verbindungsträger (3) mechanisch gehalten werden, wenn das Gehäuse (1) geschlossen ist.

## Claims

1. Lighting module for the passenger compartment of a vehicle
automotive, the module comprising:
- a housing (1),
- light means (303) arranged in the housing and capable of emitting a light beam of illumination having a wavelength selectively chosen from at least two wavelengths
predetermined distinctions,
- electronic means of control (302) of the light means
(303) arranged to control the emission of the illumination beam with the selected wavelength,
- an electrical interconnection support (3) carrying the means (303) and the electronic control means (302) and interconnecting the latter,
- electrical connection means (31, 32, 35, 36), light means (303) and/or electronic control means (302) with the outside of the housing,
- optical interface means (21, 34) for guiding the light beam out of the housing (1);
**characterized by** the fact that it comprises a base (20) and a cover (40), the cover being configured to cooperate with the base so as to close the box; and by the fact that the cover is configured to
cooperate with the base plate in order to close the housing in a light-tight manner.

2. Module according to claim 1, **characterized in that** the light means (303) comprise at least two transmitter chips semiconductors each emitting light radiation of a different wavelength.

3. Module according to claim 2, **characterized in that** the light means (303) comprise three semiconductor emitting chips emitting light radiation respectively, red blue and green.

4. Module according to one of claims 2 or 3, **characterized in that** the emitting chips are light-emitting diodes.

5. Module according to one of the previous claims, **characterized in that** it also includes temperature sensor means (304), intended to capture the temperature of the light means (303) and connected to the electronic control means (302).

6. Module according to the previous claim, **characterized in that** the temperature sensor means (304) include a thermistor with a negative temperature coefficient.

7. Module according to one of the previous claims, **characterized in that** it also includes electrical protection circuits (301), carried by the interconnection support and connected between the electronic control means (302) and the electrical connection means (31, 32, 35, 36).

8. Module according to one of the above claims, **characterized in that** the interconnection support (3) is configured to be arranged in the base (20).

9. Module according to the previous claim, **characterized in that** the base (20) and the cover (40) are configured so that the connection means and/or the interconnection support (3) are mechanically maintained when the housing (1) is closed.
